# EUROPÄISCHE PATENTSCHRIFT

(11) **EP 0 321 890 B1**
(45) Veröffentlichungstag und Bekanntmachung des Hinweises auf die Patenterteilung: **21.04.1993**
(21) Anmeldenummer: 88121180.9
(22) Anmeldetag: 17.12.1988
(51) Int. Cl.: B25J 9/14, B65F 3/04

(54) **Handhabungsgerät**
Manipulating device
Dispositif manipulateur

(30) Priorität: 22.12.1987 DE 3743564; 15.01.1988 DE 3800990
(43) Veröffentlichungstag der Anmeldung: 28.06.1989
(73) Patentinhaber: BARMAG AG, D-42862 Remscheid (DE); EDELHOFF POLYTECHNIK GMBH & CO., D-58640 Iserlohn (DE)
(72) Erfinder: Hahmann, Wolfgang, Dr., D-4152 Kemper 1 (DE); Kirchhoff, Johannes, D-5860 Iserlohn (DE); Sandkühler, Georg, D-5870 Hemer 6 (DE)
(74) Vertreter: Pfingsten, Dieter, Dipl.-Ing.

(56) Entgegenhaltungen:
- DE-A- 3 420 058
- GB-A- 2 175 877
- US-A- 4 121 504
- US-A- 4 125 974
- US-A- 4 356 554
- US-A- 4 622 886

## Beschreibung

Die Erfindung betrifft ein Handhabungsgerät mit zwei hydraulischen Antrieben, die unabhängig voneinander steuerbar sind.

Diese Handhabungsgeräte kommen in allen Gebieten der Technik und insbesondere bei sog. Robotern vor, durch welche Gegenstände in einer Ebene verfahren und positioniert werden müssen.

Um beliebige Bahnen fahren und beliebige Positionen ansteuern zu können, sind die Antriebe unabhängig voneinander durch eine erste und eine zweite Steuereinrichtung steuerbar. Es ist ersichtlich, daß für diese unabhängige Steuerung ein erheblicher hydraulischer Aufwand erforderlich ist, da zwischen der Druckquelle und den Antrieben und den zugehörigen Steuereinrichtungen die notwendigen hydraulischen Leitungen verlegt werden müssen.

Die Erfindung löst die Aufgabe, für ein Handhabungsgerät nach dem Oberbegriff eine hydraulische Schaltung anzugeben, die einen geringen hydraulischen Schaltungsaufwand erfordert und robust ist.

Die Lösung ergibt sich aus Anspruch 1.
Die Ausgestaltung nach Anspruch 2 macht von dem Vorteil der Erfindung Gebrauch, daß der zweite Antrieb ohne zusätzliche bewegliche, hydraulische Leitungen an dem Läufer des ersten hydraulischen Antriebes sitzen kann, so daß die Bewegungen der beiden Antriebe überlagert werden.

Bei dem ersten Antrieb im Sinne dieser Erfindung und dieser Anmeldung muß es sich um einen Antrieb mit endlicher Bewegung in Form einer geradlinigen oder gekrümmten Linearbewegung handeln. Ein solcher Linearantrieb ist insbesondere eine Zylinder-/Kolben-Einheit. Der zweite Antrieb kann ein rotierender Antriebsmotor oder ebenfalls ein Linearantrieb, also insbesondere eine Zylinder-/Kolben-Einheit sein. Bei den Zylinder-/Kolben-Einheiten im Rahmen dieser Anmeldung kann der Kolben mit Kolbenstange gegenüber dem Zylinder oder der Zylinder gegenüber dem Kolben mit Kolbenstange beweglich sein. Das bewegliche Teil wird in dieser Anmeldung als Läufer bezeichnet.

Wenn der zweite Antrieb am Läufer des ersten Antriebes befestigt wird, so wird der erste Antrieb mit der ersten hydraulischen Steuereinrichtung, die ortsfest sein kann, über Rohrleitungen verbunden. In einer robusten, störungsunempfindlichen Ausgestaltung der Erfindung befinden sich sämtliche hydraulische Leitungen zwischen dem ersten Antrieb und der zweiten hydraulischen Steuereinrichtung und dem zweiten Antrieb an dem Läufer des ersten Antriebes, so daß keine weiteren hydraulischen Leitungen, die einerseits ortsfest und andererseits mit dem ersten oder zweiten Antrieb beweglich sind, erforderlich sind. Die hydraulische erste und/oder zweite Steuereinrichtung wird vorzugsweise elektrisch durch Elektromagneten betätigt. Daher müssen in dieser Ausgestaltung lediglich elektrische Leitungen zur Ansteuerung der zweiten Steuereinrichtung verlegt werden.

Erfindungsgemäß ist der kleine Zylinderraum des ersten Antriebes in allen Betriebsstellungen der stetig steuerbaren ersten Steuereinrichtung mit einem konstanten Druck beaufschlagt. Dies geschieht in der Ausgestaltung nach Anspruch 5 dadurch, daß der kleine Zylinderraum mit der Pumpe und außerdem mit einem Druckbegrenzungsventil verbunden wird. Hierdurch kann der Pumpendruck konstant gehalten werden.

Die Steuergenauigkeit wird nach Anspruch 6 erhöht, indem ein vorgesteuertes Druckbegrenzungsventil benutzt wird, dessen Vorsteuerstufe die Pumpenleitung mit dem Tank verbindet und die auf ihrer Steuerseite einerseits durch eine Feder und andererseits über eine Drossel mit dem Pumpendruck belastet ist. Hierdurch kann der Pumpendruck feinfühlig auf einen konstanten Wert ausgeregelt werden.

In einer hydraulisch einfachen Ausgestaltung, bei der die Schaltung großer hydraulischer Ströme vermieden wird (Anspruch 7), wird eine Aus-Stellung (Ruhestellung) für die erste Steuereinrichtung vorgesehen, in der die Beaufschlagung der Federseite der Vorsteuerstufe des Druckbegrenzungsventils mit dem Pumpendruck unterbrochen wird, so daß die Federdruckseite über eine Drossel lediglich noch mit dem Tank verbunden ist. Dadurch wirkt das Druckbegrenzungsventil als Überdruckventil, wobei die Feder so ausgelegt ist, daß die Pumpe lediglich noch gegen einen geringen Druck (z.B. 12 bar) fördern muß.

Es wurde darauf hingewiesen, daß die erste Steuereinrichtung den kleinen Zylinderraum in allen Stellungen mit der Pumpe verbindet. Zusätzlich erfolgt in allen Betriebsstellungen der ersten Steuereinrichtung eine Verbindung der Vorsteuerstufe zur Rückmeldung des Pumpendrucks. Die Fahrbewegung des ersten Antriebs wird dadurch gesteuert, daß die erste Steuereinrichtung in stetigem Übergang den großen Zylinderraum mit dem Tank verbindet, den großen Zylinderraum abschließt, den großen Zylinderraum ebenfalls mit der Pumpe verbindet.

Bei der Ausgestaltung nach Anspruch 10 wird sichergestellt, daß der Durchfluß des zweiten Antriebes lastunabhängig und unabhängig von der Druckdifferenz des ersten Antriebes einstellbar ist, so daß auch die Geschwindigkeit des ersten Antriebes proportional dem Eingangssignal der zweiten Steuereinrichtung ist. Vorzugsweise ist die zweite Steuereinrichtung elektrisch ansteuerbar, so daß zwischen dem ortsfesten Steuerstand und dem Läufer der ersten Steuereinrichtung lediglich eine elektrische Verbindung erforderlich ist.

Das erfindungsgemäße Handhabungsgerät läßt sich in besonders vorteilhafter Weise im Zusammenhang mit Hub-Kipp-Vorrichtungen für Müllsammelfahrzeuge einsetzen. Beispielsweise ist ein aus der DE-OS 34 20 058 bekanntes Müllsammelfahrzeug mit einer Hub-Kipp-Vorrichtung versehen, die eine Aufnahmeeinrichtung für Müllbehälter aufweist, die mit einem auf einer Tragschiene verschieblich geführten und durch eine erste Druckmittel-Kolben-Zylinder-Einheit verfahrbaren Tragstück versehen ist, auf dem ein eine Aufnahmeklaue tragender Schwenkarm gelagert ist, der durch eine zweite Druckmittel-Kolben-Zylinder-Einheit verschwenkbar ist. Bei dieser bekannten Aufnahmeeinrichtung lassen sich zwar die erste und die zweite Druckmittel-Kolben-Zylinder-Einheit zum Verfahren des Tragstücks und zum Ausschwenken des Schwenkarms getrennt steuern. Es besteht jedoch das besondere Problem, der mit dem Tragstück verfahrbaren zweiten Druckmittel-Kolben-Zylinder-Einheit das Drucköl zuzuführen, wozu es erforderlich ist, Druckölleitungen vorzusehen, deren einen Anschlüsse stationär sind und deren andere Anschlüsse mit dem Tragstück verfahren werden müssen, so daß abgesehen von der Schwierigkeit, die Leitungen behinderungsfrei verlegen zu können, diese der Gefahr einer Beschädigung im rauhen Sammelbetrieb ausgesetzt sind.

Aus der DE-PS 36 31 914 ist eine Aufnahmeeinrichtung für Müllbehälter an Hub-Kipp-Vorrichtungen von Müllsammelfahrzeugen bekannt, bei der der mit dem Tragstück verfahrbare Schwenkarm nicht mehr von einer eigenen Druckmittel-Kolben-Zylinder-Einheit verschwenkt wird, sondern seine Ausschwenkbewegung über eine Kurvenführung von der Bewegung des Tragstücks ableitet. Diese bekannte Aufnahmeeinrichtung kommt daher nur mit einer das Tragstück verfahrenden Druckmittel-Kolben-Zylinder-Einheit aus, sie ermöglicht aber keine von der Bewegung des Tragstücks unabhängige Steuerung des Schwenkarms, weil die Ausschwenkbewegung des Schwenkarms über eine Kurvensteuerung von der Bewegung des Tragstücks auf der Tragschiene abgeleitet ist.

Nach einer besonders vorteilhaften Ausgestaltung der Erfindung bilden daher bei einer Aufnahmeeinrichtung für Müllbehälter von Müllsammelfahrzeugen die erste und die zweite Druckmittel-Kolben-Zylinder-Einheit die beiden hydraulischen Antriebe des Handhabungsgerätes, wobei die Kolbenstange der ersten Druckmittel-Kolben-Zylinder-Einheit an einem Endbereich der Tragschiene und das Tragstück an deren Zylinder befestigt ist, wobei die die Zylinderkammern der ersten Druckmittel-Kolben-Zylinder-Einheit mit Drucköl versorgenden Leitungen durch die Kolbenstange und den Kolben hindurchgeführt sind und wobei die Druckölversorgungsleitungen für die zweite Druckmittel-Kolben-Zylinder-Einheit an Endbereichen des Zylinders der ersten Druckmittel-Kolben-Zylinder-Einheit angeschlossen sind, die nicht von dem Kolben überfahren werden. Die mit dem erfindungsgemäßen Handhabungsgerät versehene Aufnahmeeinrichtung gestattet es daher, das Tragstück unabhängig von der Schwenkbewegung des auf diesem gelagerten Schwenkarms auf der Tragschiene zu verfahren, ohne daß von dem Tragstück Versorgungsleitungen für den Schwenkantrieb des Schwenkarms mitgeschleppt werden müßten.

Ausführungsbeispiele der Erfindung werden nachstehend anhand der Zeichnung näher erläutert.

In dieser zeigen:
- Fig. 1: einen Hydraulikschaltplan des Handhabungsgerätes in schematischer Darstellung;
- Fig. 1A: einen Ausschnitt aus dem Schaltplan nach Fig. 1 mit einer Vergrößerung des Schaltplanes der Steuereinrichtung 11;
- Fig. 2: eine Vorderansicht eines Müllsammelfahrzeugs mit einer Hub-Kipp-Vorrichtung, die mit einer Aufnahmeeinrichtung für Müllbehälter versehen ist;
- Fig. 3: eine Draufsicht auf die Aufnahmeeinrichtung nach Fig. 2;
- Fig. 4: eine schematische Darstellung der Druckmittel-Kolben-Zylinder-Einheiten und der Anordnung von deren Druckölleitungen zum Verfahren des Tragstücks der Aufnahmeeinrichtung auf der Tragschiene.

In dem Schaltplan ist ein erster Antrieb 1 mit der ihm zugeordneten ersten Steuerung 11 sowie ein zweiter Antrieb 2 mit der ihm zugeordneten zweiten Steuerung 12 dargestellt. Der erste Antrieb 1 ist eine Zylinder-/Kolben-Einheit. In dem Zylinder 3 ist der Differentialkolben 4 mit Kolbenstange 5 beweglich. Der Kolben 4 mit der Kolbenstange 5 bildet in dem Zylinder den kleinen Zylinderraum 6 und die von der Kolbenstange 5 abgewandte große Kolbenfläche bildet in dem Zylinder den großen Zylinderraum 7. Im Sinne dieser Anmeldung stellt der erste Antrieb 1 einen Linearantrieb dar. Im Sinne dieser Anmeldung ist die Kolbenstange 5 der Läufer des ersten Antriebes 1.

An der Kolbenstange 5 ist der zweite Antrieb befestigt. Der zweite Antrieb ist im dargestellten Falle ebenfalls ein Linearantrieb in Form einr Zylinder-/Kolben-Einheit. Es kann sich jedoch auch um einen Hydraulikmotor oder jeden anderen hydraulischen Antrieb handeln. Der dargestellte zweite Antrieb 2 besitzt einen Zylinder 8, in dem der Kolben 9 mit Kolbenstange 10 befestigt ist. An der Kolbenstange 10 sitzen z.B. Greifer zum Greifen eines Werkstückes oder eines Gefäßes, welches von einer Position in eine andere auf einer beliebig vorgebbaren Bahn transportiert werden soll.

Die Kolbenstange 10 stellt im Sinne dieser Anmeldung den Läufer des zweiten Antriebs 2 dar.

Die Position der Kolbenstange 5 des ersten Antriebes 1 wird durch einen Wegfühler 22 und eine Wegmeßeinrichtung 23 ständig abgetastet. Bei dem Wegmeßgeber 23 kann es sich z.B. um ein Potentiometer handeln, dessen Ausgangsspannung U in Abhängigkeit von der Wegmeßstrecke S des Wegfühlers 22 verstellt wird. Das Ausgangssignal des Wegmeßgebers 23 wird mit einem - z.B. durch eine Bedienungsperson - eingebbaren Sollwert verglichen. Der Differenzwert wird einem Regler 24 aufgegeben. In Abhängigkeit von dem Vorzeichen des Differenzsignals steuert der Regler den linken Verstellmagneten 26 oder den rechten Verstellmagneten 27 der ersten Steuereinrichtung 11 an.

Die erste Steuereinrichtung 11 enthält ein Wegeventil 29, das stetig zwischen vier Schaltstellungen schaltbar ist und durch Federn 28 in einer dieser Schaltstellungen gehalten wird, wenn die Verstellmagneten 26, 27 nicht magnetisiert sind. Auf die einzelnen Schaltstellungen des Ventils 29 wird später eingegangen. Das Ventil 29 ist einerseits über Pumpenanschluß 33 mit der Pumpe und andererseits über Tankanschluß 34 mit dem Tank 14 verbunden. Die weiteren Anschlüsse A, B sind über Leitung 36 mit dem kleinen Zylinderraum 6 des ersten Antriebs 1 und über die Leitung 37 mit dem großen Zylinderraum 7 des ersten Antriebs 1 verbunden. Weiterhin besitzt das Ventil 29 einen Anschluß R für die Pumpendruck-Rückmeldeleitung 20, auf deren Funktion im folgenden noch eingegangenen wird. Die erste Steuereinrichtung 11 umfaßt ferner ein vorgesteuertes Druckbegrenzungsventil mit der Hauptsteuerstufe 16, dem Druckeinstellventil 17 und der Drossel 18, die in die Pumpendruck-Rückmeldeleitung 20 eingeschaltet ist. Der Kolben der Hauptsteuerstufe 16 steuert die Umlaufleitung 30 zwischen Pumpe 13 und Tank 14 in Abhängigkeit von einer Feder 31 und von dem Druck, der auf die Federseite des Hauptsteuerkolbens über Pumpendruck-Rückmeldeleitung 20 in den Betriebsstellungen des Wegeventils 29 gegeben wird. Andererseits ist die Pumpendruck-Rückmeldeleitung 20 über das Druckeinstellventil 17, das ebenfalls federdruckentlastet ist, zum Tank 14 hin entlastbar. Ein geeignetes vorgesteuertes Druckbegrenzungsventil mit Hauptsteuerstufe 16, Druckeinstellventil 17 und Drossel 18 ist z.B. in dem Buch Backé "Grundlagen der Ölhydraulik", 4. Aufl. 1979, Seite 243, bekannt. Im übrigen ist die Pumpendruck-Rückmeldeleitung 20 ständig über Entlastungsleitung 21 und eine Feindrossel 19, die kleiner als die Drossel 18 ist, mit dem Tank verbunden.

Das Wegeventil 29 besitzt vier Schaltstellungen, zwischen denen das Ventil stetig schaltbar ist. In sämtlichen Schaltstellungen ist der Pumpenanschluß P über Anschluß A und Leitung 36 mit dem kleinen Zylinderraum 6 verbunden. In der Neutralstellung 40, in der die Magnete 26, 27 nicht beaufschlagt sind, ist zusätzlich der große Zylinderraum 7 über Anschlüsse B-T mit dem Tank verbunden. Ferner ist in der Neutralstellung die Steuerseite der Hauptsteuerstufe 16 des Druckbegrenzungsventils 15 über Anschluß R und Pumpendruck-Rückmeldeleitung 20 sowie Drossel 18 mit dem Pumpendruck beaufschlagt. Bei Erregung des Magneten 27 schaltet das Ventil 29 in seine Aus-Stellung 41. In der Aus-Stellung 41 wird die Pumpendruck-Rückmeldeleitung 20 abgeklemmt. Daher wird die Steuerseite der Hauptsteuerstufe 16 über die Drosseln 18 und 19 zum Tank hin druckentlastet, so daß auf den Kolben der Hauptsteuerstufe lediglich die Feder 31 mit geringer Federkraft lastet. Daher wirkt in dieser Stellung die Hauptsteuerstufe 16 wie ein sog. Umlaufventil, das schon bei geringem, durch die Feder 31 bewirktem Druck die Pumpe 13 über Umlaufleitung 20 mit dem Tank 14 verbindet und auf diese Weise eine fast verlustlose Umlaufförderung des Öls bewirkt.

In Abhängigkeit von der Erregung des Stellmagneten 26 ist das Wegeventil 29 aus der Neutralstellung 40 in die weiteren Betriebsstellungen 42 und 43 schaltbar. Dabei wird in der zweiten Betriebsstellung 42 die in der ersten Betriebsstellung bestehende Verbindung des großen Zylinderraums 7 mit dem Tank 14 unterbrochen und sodann in der dritten Betriebsstellung 43 der große Zylinderraum 7 mit dem Pumpenanschluß 33 verbunden.

Die zweite Steuereinrichtung 12 weist als Kernstück ein Proportionalwegeventil 32 auf. Das Ventil ist über seinen Anschluß P und über die Druckleitung 46 mit dem kleinen Zylinderraum 6 und über seinen Anschluß T und die Rücklaufleitung 47 mit dem großen Zylinderraum 7 verbunden.

Ferner ist das Wegeventil 32 über seine Anschlüsse A und Leitung 38 mit dem einen Zylinderraum und über Anschluß B und Leitung 39 mit dem anderen Zylinderraum des Zylinders 8 des zweiten Antriebs 2 verbunden. In die Druckleitung 46 ist eine 2-Wege-Druckwaage 35 eingeschaltet, wie sie z.B. in Backé a.a.o. S. 242 beschrieben ist. Das Proportional-Wegeventil 32 besitzt noch Anschlüsse für einen Lastdruckmeldekanal, über den die Federseite der Druckwaage 35 mit dem Lastdruck der Anschlüsse A oder B des Proportionalventiles über Drossel 44 beaufschlagt werden kann. Schließlich ist ein Druckbegrenzungsventil 45 vorgesehen, durch das die eine der Lastdruckleitungen 38 bzw. 39 je nach der Schaltstellung des Proportional-Wegeventils 32 zu dem großen Zylinderraum 7 über Rücklaufleitung 47 entlastbar sind.

Das Proportionalventil 32 wird durch die Elektromagneten 48, 49 sowie Regler 50 angesteuert. Dem Regler 50 kann - z.B. von Hand - ein Sollwert für den zweiten Antrieb vorgegeben werden. In Abhängigkeit von dem Sollwert schaltet das Proportionalventil 32 aus seiner mittleren Ruhestellung in eine seiner Betriebsstellungen. In den Betriebsstellungen wird der Kolben 9 des zweiten Antriebs 2 auf seiner jeweiligen Arbeitsdruckseite mit dem Druck des kleinen Zylinderraums 6 und auf seiner Ablaufseite mit dem Druck in dem großen Zylinderraum 7 beaufschlagt. In Abhängigkeit von der Druckdifferenz zwischen dem großen und dem kleinen Zylinderraum 6 bzw. 7 führt daher der Kolben mit Kolbenstange 10 eine Bewegung in der einen oder anderen Richtung aus.

### Zur Wirkungsweise:

Die Pumpe des Gesamtsystems ist in Dauerbetrieb.
1. Die Sollwertvorgabe für Regler 24 ist so, daß der Magnet 27 erregt wird. Das Wegeventil 29 geht in seine Aus-Stellung 41. Der kleine Zylinderraum des ersten Antriebs 1 ist mit der Pumpe und der große Zylinderraum 7 mit dem Tank verbunden. Die Vorsteuerstufe 16 wird nicht mit dem Pumpendruck über Leitung 20 beaufschlagt, sondern ist über Drossel 18 und Entlastungsleitung 21 sowie Feindrossel 19 zum Tank 14 hin druckentlastet. Daher wirkt nur die Feder 31 mit relativ geringer Kraft im Schließsinne auf den Kolben der Vorsteuerstufe 1. Bei einem Druck von z.B. 12 bar öffnet das Vorsteuerventil, so daß der Pumpenstrom bei diesem Druck über Entlastungsleitung 30 zum Tank geführt wird. Da in dem Zylinderraum 7 kein Druck herrscht, genügt der geringe Druck in dem kleinen Zylinderraum 6, um den Kolben 4 - in der Figur - nach links gegen Anschlag zu verfahren. Der Druck im Zylinderraum 6 kann zwar noch auf Antrieb 2 gegeben werden, reicht jedoch nur für den Leerlaufbetrieb aus. Vorzugsweise erfolgt die Programmierung des Reglers 50 so, daß in der Aus-Stellung des Wegeventils 29 eine der Schaltstellungen des Proportionalventils 32 angefahren wird und daher der Antrieb 2 in eine Ruheposition fährt.
2. Betrieb des Handhabungsgerätes:
   Im Betrieb des Handhabungsgerätes werden stetig die Stellungen 40, 42, 43 des Wegeventils 29 angefahren, wobei die Betriebsstellung 42 angefahren wird, wenn das Ausgangssignal des Wegmeßgebers 23 gleich dem Sollwertsignal und damit das Differenzsignal 25 gleich Null ist. Wird der Sollwert verändert, so wird der Magnet 26 stärker oder schwächer erregt und es werden die Betriebsstellungen 43 bzw. 40 angefahren. Hierdurch wird zwar der kleine Zylinderraum 6 weiterhin mit dem Pumpendruck beaufschlagt. Fernerhin wird die Steuerseite der Vorsteuerstufe 16 über Druck-Rückmeldeleitung 20 weiterhin mit dem Pumpendruck beaufschlagt. Der Druck in dem großen Zylinderraum 7 wird jedoch zwischen dem Tankdruck und dem vollen Pumpendruck verstellt und in der Mittelstellung 42 wird der Zylinderraum 7 verschlossen. Da der Kolben 4 als Differentialkolben ausgelegt ist, ist für ein Kräftegleichgewicht am Kolben 4 ein höherer Druck im kleinen Pumpenraum 6 als im großen Pumpenraum 7 erforderlich. Da fernerhin über den Wegfühler 22 und den Wegmeßgeber 23 sowie den Regler 24 die Position des Kolbens 5 dem Regler 24 rückgemeldet wird, stellt sich das Wegeventil 29 zwischen den extremen Betriebsstellungen 40 und 43 auf eine solche Position ein, daß am Kolben 4 Kräftegleichgewicht besteht und der Kolben 4 in der durch den Sollwert vorgegebenen Position verharrt. Das Kräftegleichgewicht an dem Kolben 4 bedeutet gleichzeitig eine feste Druckdifferenz zwischen dem kleinen Zylinderraum 6 und dem großen Zylinderraum 7. Diese Druckdifferenz wird nun ausgenutzt zum Betrieb des zweiten Antriebs 2. Die Druckwaage 35 sorgt jedoch dafür, daß der Druckölstrom aus dem kleinen Zylinderraum 6 über Druckleitung 46 auch dann konstant bleibt, wenn die Druckdifferenz zwischen dem großen und dem kleinen Zylinderraum sich ändert, was z.B. bei Beschleunigung oder Verzögerung oder bei äußerer Belastung des ersten Antriebes vorkommen kann. Hierzu ist vorgesehen, daß die Federseite der Druckwaage bei Einschaltung des zweiten Antriebes jeweils mit der als Lastdruckleitung dienenden Leitung 38 bzw. 39 verbunden wird. In den Betriebsstellungen des Proportionalventils 32 fließt das Öl aus dem von der Arbeitsseite abgewandten Zylinderraum jeweils über die Rücklaufleitung 47 in den großen Zylinderraum 7 zurück. Dies bleibt jedoch infolge der Positionsregelung des Antriebes 1 ohne Auswirkung. Über Regler 50 kann der zweite Antriebe 2 und über Regler 24 der erste Antrieb 1 gesteuert werden, wobei die Steuerungen unabhängig voneinander sind.

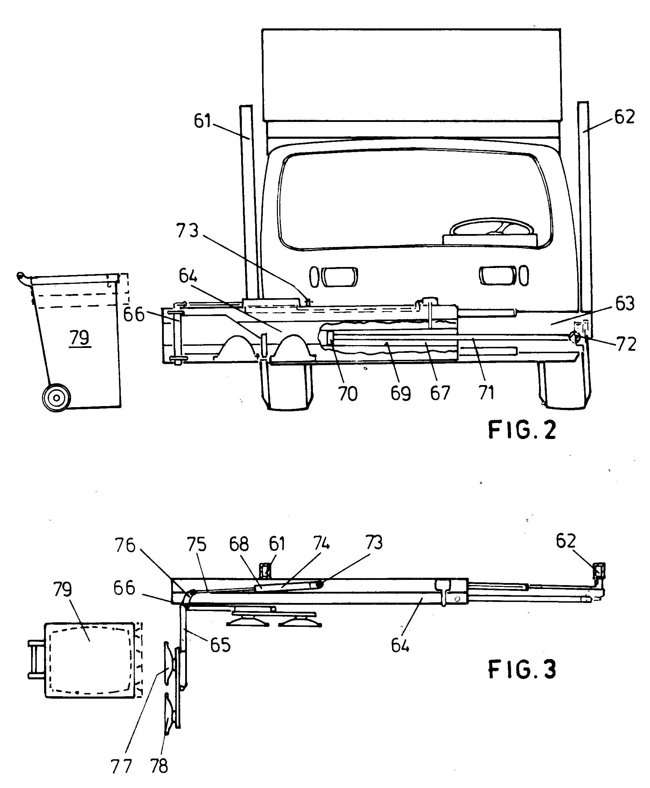

Aus Fig. 2 ist die Vorderansicht eines Müllsammelfahrzeugs ersichtlich, wie es seiner grundsätzlichen Art nach beispielsweise aus der DE-OS 34 20 058 bekannt ist. Dieses Müllsammelfahrzeug ist mit einer Hub-Kipp-Vorrichtung versehen, die aus zwei beidseits des Führerhauses angeordneten Vierkant-Profil-förmigen Schwenkarmen 61, 62 besteht, deren freie Enden durch eine Tragschiene 63 miteinander verbunden sind. Auf der Tragschiene 63 ist das Tragstück 64 querverschieblich geführt, auf dem der Schwenkarm 65 um die Schwenkachse 66 schwenkbar gelagert ist. Für das hier beschriebene Ausführungsbeispiel interessieren nur die das Tragstück 64 auf der Tragschiene 63 verfahrende Druckmittel-Kolben-Zylinder-Einheit 67 und die den Schwenkarm 65 relativ zu dem Tragstück 64 verschwenkende Druckmittel-Kolben-Zylinder-Einheit 68, so daß wegen der weiteren Ausgestaltung der Hub-Kipp-Vorrichtung auf deren Beschreibung in der DE-OS 34 20 058 Bezug genommen wird.

Die erste das Tragstück 64 auf der Tragschiene 63 hin- und herverfahrende Druckmittel-Kolben-Zylinder-Einheit 67 besteht aus dem Zylinder 69, der fest mit dem Tragstück 64 verbunden ist, und der mit dem Kolben 70 verbundenen Kolbenstange 71, die mit ihrem äußeren Ende 72 gelenkig mit der Tragschiene 63 verbunden ist.

Auf dem Tragstück 64 ist um den Zapfen 73 der Zyliner 74 der zweiten Druckmittel-Kolben-Zylinder-Einheit 68 schwenkbar gelagert. Das äußere Ende der Kolbenstange 75 ist gelenkig mit einem mit der Schwenkwelle 66 verbundenen Hebel 76 verbunden, so daß die Druckmittel-Kolben-Zylinder-Einheit 68 den die beiden Aufnahmeklauen 77, 78 sich tragenden Schwenkhebel 65 auszuschwenken und an das Tragstück 64 anzuklappen vermag.

In Fig. 3 ist der Schwenkarm 65 in siner ausgeschwenkten und an das Tragstück 64 angeklappten Stellung dargestellt. In seiner ausgeschwenkten Stellung vermag der Schwenkarm 65 mit seinen Aufnahmeklauen 77, 78 bereitgestellte Müllbehälter 79 durch Ankuppeln aufzunehmen.

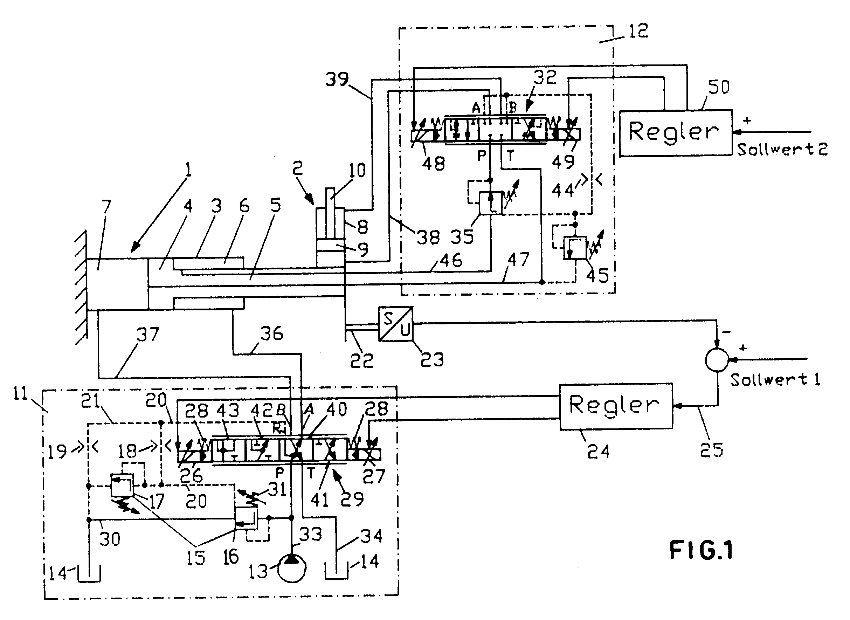

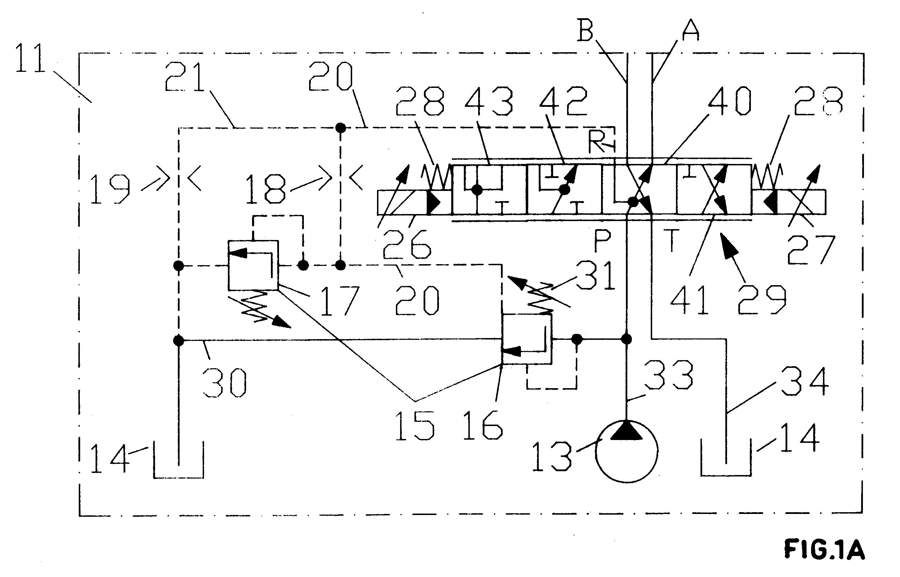

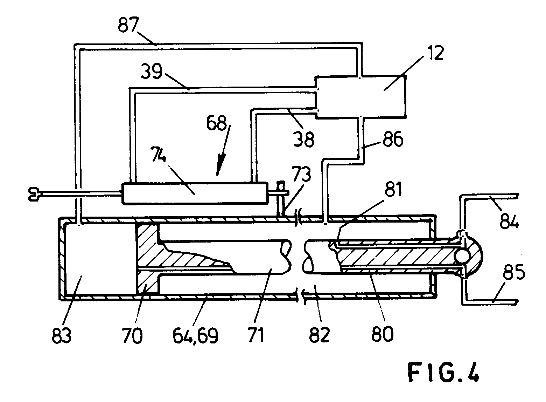

Wie aus der schematischen Darstellung gemäß Fig. 4 ersichtlich ist, ist die Kolbenstange 71 der ersten Druckmittel-Kolben-Zylinder-Einheit 67 mit zwei Bohrungen 80, 81 versehen, die in die ringförmige Zylinderkammer 82 und die endseitige Zylinderkammer 83 münden. Die Bohrungen 80, 81 sind mit den Druckmittelleitungen 84, 85 verbunden, die den Druckmittelleitungen 46, 47 nach Fig. 1 entsprechen.

Die Zylinderkammern 82, 83 sind über Druckmittelleitungen 86, 87 mit dem Steuergerät 12 verbunden. Von dem Steuergerät 12 führen die Druckmittelleitungen 38, 39 zu der zweiten Druckmittel-Kolben-Zylinder-Einheit 68.

Selbstverständlich könnte die erste Druckmittel-Kolben-Zylinder-Einheit 67 auch so eingebaut werden, daß der Zylinder 69 gelenkig mit der Tragschiene 63 und die Kolbenstange 61 fest mit dem Tragstück 64 verbunden ist. Bei einer solchen Anordnung wären die Versorgungsleitungen entsprechend der ersten Druckmittel-Kolben-Zylinder-Einheit 1 in Fig. 1 anzuordnen.

### BEZUGSZEICHENAUFSTELLUNG

- 1: erster Antrieb
- 2: zweiter Antrieb
- 3: Zylinder
- 4: Kolben, Differentialkolben
- 5: Kolbenstange
- 6: kleiner Zylinderraum
- 7: großer Zylinderraum
- 8: Zylinder
- 9: Kolben
- 10: Kolbenstange
- 11: erste Steuereinrichtung
- 12: zweite Steuereinrichtung
- 13: Pumpe
- 14: Tank
- 15: Druckbegrenzungsventil
- 16: Hauptsteuerstufe
- 17: Überdruckventil, Druckeinstellventil
- 18: Drossel
- 19: Ablaßdrossel
- 20: Pumpendruck-Rückmeldeleitung
- 21: Umlaufleitung
- 22: Wegfühler
- 23: Wegmeßgeber
- 24: Regler
- 25: Differenzsignal
- 26: Verstellmagnet
- 27: Verstellmagnet
- 28: Feder
- 29: Ventil, Wegeventil
- 30: Entlastungsleitung
- 31: Feder
- 32: Proportional-Wegeventil
- 33: Pumpenanschluß
- 34: Tankanschluß
- 35: 2-Wege-Druckwaage
- 36 ):
- 37 ):
- 38 ): Leitung
- 39 ):
- 40: Neutralstellung
- 41: Aus-Stellung, Ruhestellung
- 42: Betriebsstellung, Mittelstellung
- 43: Betriebsstellung
- 44: Drossel
- 45: Druckbegrenzungsventil
- 46: Druckleitung
- 47: Rücklaufleitung
- 48: Verstellmagnet
- 49: Verstellmagnet
- 50: Regler

## Patentansprüche

1. Handhabungsgerät
mit zwei hydraulischen Antrieben, die durch eine erste und eine zweite Steuereinrichtung unabhängig voneinander steuerbar sind,
gekennzeichnet durch die folgenden Merkmale:
1.1 der erste Antrieb (1) ist eine Einheit aus Zylinder (3) und Differentialkolben (4), der den Zylinder in einen kleinen Zylinderraum (6) und einen großen Zylinderraum (7) teilt,
wobei der Läufer des ersten Antriebes der Zylinder oder der Kolben ist;
1.2 der kleine Zylinderraum (6) wird im Betrieb des Handhabungsgeräts mit konstantem Druck beaufschlagt;
1.3 der Druck im großen Zylinderraum (7) wird im Betrieb des Handhabungsgeräts über die erste Steuereinrichtung (11) in Abhängigkeit von einer Sollwertvorgabe für die Position des Läufers (5) des ersten Antriebes (1) gesteuert;
2. der zweite Antrieb (2) ist über die zweite Steuereinrichtung (12) druckseitig mit dem kleinen Zylinderraum (6) und abflußseitig mit dem großen Zylinderraum (7) des ersten Antriebes (1) verbunden.

2. Handhabungsgerät nach Anspruch 1,
dadurch gekennzeichnet, daß
Der zweite Antrieb ist auf dem Läufer (5) des ersten Antriebs (1) befestigt.

3. Handhabungsgerät nach Anspruch 2,
dadurch gekennzeichnet, daß
die Hydraulikanschlüsse (46, 47) für den zweiten Antrieb (2) sowie die zweite Steuereinrichtung (12) an dem Läufer (5) des ersten Antriebs (1) befestigt sind.

4. Handhabungsgerät nach einem der vorangegangenen Ansprüche,
dadurch gekennzeichnet, daß
auch der zweite Antrieb (2) eine Einheit aus Zylinder (8) und Kolben (9) ist, wobei der Läufer des zweiten Antriebs der Zylinder oder der Kolben ist.

5. Handhabungsgerät nach einem der vorangegangenen Ansprüche,
dadurch gekennzeichnet, daß
der kleine Zylinderraum (6) in sämtlichen Betriebsstellungen (40, 42, 43) der ersten Steuereinrichtung (11) mit der Pumpe (13) und mit einem Druckbegrenzungsventil (15) verbunden ist.

6. Handhabungsgerät nach Anspruch 5,
dadurch gekennzeichnet, daß
das Druckbegrenzungsventil (15) aus einer Hauptsteuerstufe (16) und einem mit dem Steuerraum der Hauptsteuerstufe verbundenen Überdruckventil (17) besteht.

7. Handhabungsgerät nach Anspruch 6,
dadurch gekennzeichnet, daß
der Steuerkolben der Hauptsteuerstufe (16) auf der Steuerseite durch eine Feder (31) sowie in sämtlichen Betriebsstellungen (40, 42, 43) der ersten Steuereinrichtung mit dem Druck des kleinen Zylinderraums (6) und in der Aus-Stellung (41) mit dem Tankdruck belastet ist.

8. Handhabungsgerät nach Anspruch 7,
dadurch gekennzeichnet, daß
in der Aus-Stellung (41) der ersten Steuereinrichtung (11) der kleine Zylinderraum (6) mit der Pumpe (13) und der große Zylinderraum (7) mit dem Tank (14) verbunden ist.

9. Handhabungsgerät nach Anspruch 8,
dadurch gekennzeichnet, daß
die erste Steuereinrichtung (11) in sämtlichen Betriebsstellungen (40, 42, 43) den kleinen Zylinderraum (6) mit der Pumpe (13) und in der Aus-Stellung (41) den großen Zylinderraum (7) mit dem Tank (14) verbindet,
und daß die erste Steuereinrichtung (11) in den Betriebsstellungen (40, 42, 43) den großen Zylinderraum mit dem Tank verbindet sowie abschließt sowie in der dritten Betriebsstellung (43) mit der Pumpe (14) verbindet.

10. Handhabungsgerät nach einem der vorangegangenen Ansprüche,
dadurch gekennzeichnet, daß
die zweite Steuereinrichtung (12) ein Proportionalventil (32) ist,
und daß in der Verbindungsleitung (46) zwischen dem kleinen Zylinderraum (6) des ersten Antriebs (1) und dem Proportionalventil das Druckregelventil (35) liegt,
durch welches die Druckdifferenz zwischen dem Eingangsdruck des Proportionalventils und dem Lastdruck des zweiten hydraulischen Antriebs (2) auf einen konstanten Wert ausgeregelt wird,
wobei vorzugsweise das Druckregelventil eine 2-Wege-Druckwaage (35) ist, deren Federraum in den Betriebsstellungen der zweiten Steuereinrichtung durch den Lastdruck des zweiten Antriebs beaufschlagt ist.

11. Handhabungsgerät nach einem der vorangegangenen Ansprüche,
dadurch gekennzeichnet, daß
die zweite Steuereinrichtung (12) elektrisch ansteuerbar ist.

12. Handhabungsgerät nach einem der vorangegangenen Ansprüche,
dadurch gekennzeichnet, daß
der Übergang zwischen den Betriebsstellungen (40, 42, 43) stetig ist.

13. Handhabungsgerät nach einem der vorangegangenen Ansprüche,
dadurch gekennzeichnet, daß
die Position des Läufers (5) des ersten Antriebs (1) durch einen Wegfühler (22) gemessen und der Ist-Wert der Position mit dem Sollwert der Position des Läufers verglichen
und daß der Druck im großen Zylinderraum (7) in Abhängigkeit von der Differenz aus Ist-Wert und Soll-Wert gesteuert wird.

14. Handhabungsgerät nach einem der Ansprüche 1 bis 13,
dadurch gekennzeichnet, daß
bei einer Aufnahmeeinrichtung für Müllbehälter (79) von Müllsammelfahrzeugen mit einem auf einer Tragschiene (63) verschieblich geführten und durch eine erste Druckmittel-Kolben-Zylinder-Einheit (67) verfahrbaren Tragstück (64), auf dem ein mindestens eine Aufnahmeklaue (77, 78) tragender Schwenkarm (65) gelagert ist, der durch eine zweite Druckmittel-Kolben-Zylinder-Einheit (68) verschwenkbar ist, die erste und die zweite Druckmittel-Kolben-Zylinder-Einheit (67, 68) die beiden hydraulischen Antriebe (1, 2) des Handhabungsgerätes bilden,
daß die Kolbenstange (71) der ersten Druckmittel-Kolben-Zylinder-Einheit (67) an einem Endbereich der Tragschiene (63) und das Tragstück (64) an deren Zylinder (69) befestigt ist,
daß die die Zylinderkammern (82, 83) der ersten Druckmittel-Kolben-Zylinder-Einheit mit Drucköl versorgenden Leitungen (80, 81) durch die Kolbenstange (71) der ersten Kolben-Zylinder-Einheit (67) hindurchgeführt sind,
und daß die Druckölversorgungsleitungen (86, 87) für die zweite Druckmittel-Kolben-Zylinder-Einheit (68) an Endbereichen des Zylinders (69) der ersten Druckmittel-Kolben-Zylinder-Einheit (67) angeschlossen sind, die nicht von dem Kolben (70) überfahren werden.

15. Handhabungsgerät nach Anspruch 14,
dadurch gekennzeichnet, daß
der Zylinder der ersten Druckmittel-Kolben-Zylinder-Einheit an einem Endbereich der Tragschiene (63) befestigt ist und die Druckölversorgungsleitungen für die zweite Druckmittel-Kolben-Zylinder-Einheit durch die Kolbenstange der ersten Druckmittel-Kolben-Zylinder-Einheit hindurchgeführt sind.

## Claims

1. Manipulating device
having two hydraulic drives, which are controllable independently of one another by means of a first and a second control device,
characterized by the following features:
1.1 the first drive (1) is a unit comprising a cylinder (3) and a step piston (4), which divides the cylinder into a small cylinder chamber (6) and a large cylinder chamber (7),
with the moving part of the first drive being the cylinder or the piston;
1.2 while the manipulating device is in operation, the small cylinder chamber (6) is acted upon by a constant pressure;
1.3 while the manipulating device is in operation, the pressure in the large cylinder chamber (7) is controlled via the first control device (11) in dependence upon a setpoint entry for the position of the moving part (5) of the first drive (1);
2. the second drive (2) is connected via the second control device (12) on the pressure side to the small cylinder chamber (6) and on the delivery side to the large cylinder chamber (7) of the first drive (1).

2. Manipulating device according to claim 1,
characterized in that
the second drive is fastened to the moving part (5) of the first drive (1).

3. Manipulating device according to claim 2,
characterized in that
the hydraulic connections (46, 47) for the second drive (2) as well as the second control device (12) are fastened to the moving part (5) of the first drive (1).

4. Manipulating device according to one of the preceding claims,
characterized in that
the second drive (2) is also a unit comprising a cylinder (8) and a piston (9), with the moving part of the second drive being the cylinder or the piston.

5. Manipulating device according to one of the preceding claims,
characterized in that
in all of the operating positions (40, 42, 43) of the first control device (11) the small cylinder chamber (6) is connected to the pump (13) and to a pressure relief valve (15).

6. Manipulating device according to claim 5,
characterized in that
the pressure relief valve (15) comprises a main control stage (16) and a pressure control valve (17) connected to the control chamber of the main control stage.

7. Manipulating device according to claim 6,
characterized in that
the control piston of the main control stage (16) is loaded on the control side by a spring (31) as well as in all of the operating positions (40, 42, 43) of the first control device by the pressure of the small cylinder chamber (6) and in the OFF position (41) by the tank pressure.

8. Manipulating device according to claim 7,
characterized in that
in the OFF position (41) of the first control device (11) the small cylinder chamber (6) is connected to the pump (13) and the large cylinder chamber (7) is connected to the tank (14).

9. Manipulating device according to claim 8,
characterized in that
the first control device (11) in all operating positions (40, 42, 43) connects the small cylinder chamber (6) to the pump (13) and in the OFF position (41) connects the large cylinder chamber (7) to the tank (14),
and that the first control device (11) in the operating positions (40, 42, 43) connects the large cylinder chamber to the tank as well as closes off the large cylinder chamber as well as, in the third operating position (43), connects the large cylinder chamber to the pump (14).

10. Manipulating device according to one of the preceding claims,
characterized in that
the second control device (12) is a proportional valve (32),
and that situated in the connection line (46) between the small cylinder chamber (6) of the first drive (1) and the proportional valve is the pressure regulating valve (35), by means of which the pressure difference between the input pressure of the proportional valve and the load pressure of the second hydraulic drive (2) is levelled out to a constant value,
with the pressure regulating valve preferably being a two-way pressure balance (35), whose spring chamber is acted upon by the load pressure of the second drive in the operating positions of the second control device.

11. Manipulating device according to one of the preceding claims,
characterized in that
the second control device (12) is electrically controllable.

12. Manipulating device according to one of the preceding claims,
characterized in that
the transition between the operating positions (40, 42, 43) is continuous.

13. Manipulating device according to one of the preceding claims,
characterized in that
the position of the moving part (5) of the first drive (1) is measured by a displacement sensor (22) and the actual value is compared to the setpoint value of the position of the moving part,
and that the pressure in the large cylinder chamber (7) is controlled in dependence upon the difference between actual value and setpoint value.

14. Manipulating device according to one of claims 1 to 13,
characterized in that
in a receiving device for refuse containers (79) of refuse collection vehicles having a carrier part (64), which is guided displaceably along a mounting rail (63) and is movable by means of a first pressure-medium piston/cylinder unit (67) and on which is supported a swivel arm (65), which carries at least one receiving claw (77, 78) and may be swivelled by means of a second pressure-medium piston/cylinder unit (68), the first and the second pressure-medium piston/cylinder units (67, 68) form the two hydraulic drives (1, 2) of the manipulating device,
that the piston rod (71) of the first pressure-medium piston/cylinder unit (67) is fastened to an end region of the mounting rail (63) and the carrier part (64) is fastened to the cylinder (69) of said unit,
that the lines (80, 81) supplying the cylinder chambers (82, 83) of the first pressure-medium piston/cylinder unit with pressure oil are led through the piston rod (71) of the first piston/cylinder unit (67),
and that the pressure oil supply lines (86, 87) for the second pressure-medium piston/cylinder unit (68) are connected to end regions of the cylinder (69) of the first pressure-medium piston/cylinder unit (67) which are not travelled over by the piston (70).

15. Manipulating device according to claim 14,
characterized in that
the cylinder of the first pressure-medium piston/cylinder unit is fastened to an end region of the mounting rail (63) and the pressure oil supply lines for the second pressure-medium piston/cylinder unit are led through the piston rod of the first pressure-medium piston/cylinder unit.

## Revendications

1. Manipulateur comportant deux dispositifs d'entraînement hydrauliques pouvant être commandés indépendamment l'un de l'autre par un premier et un deuxième dispositif de commande,
caractérisé par les caractéristiques suivantes :
1.1 le premier dispositif d'entraînement (1) est une unité constituée d'un cylindre (3) et d'un piston différentiel (4) qui partage le cylindre en une petite chambre de cylindre (6) et une grande chambre de cylindre (7),
la partie mobile du premier dispositif dispositif d'entraînement étant le cylindre ou le piston;
1.2 lors de la marche du manipulateur, la petite chambre (6) est exposée à une pression constante;
1.3 lors de la marche du manipulateur, la pression dans la grande chambre (7) est commandée, par le premier dispositif de commande (11), en fonction d'une valeur de consigne imposée concernant la position de la partie mobile du premier dispositif d'entraînement (1);
2. par le deuxième dispositif de commande (12), le deuxième dispositif d'entraînement (2) est relié, côté pression, à la petite chambre de cylindre (6) et, côté sortie, à la grande chambre de cylindre (7) du premier dispositif d'entraînement (1).

2. Manipulateur selon revendication 1,
caractérisé par le fait que le deuxième dispositif d'entraînement est fixé sur la partie mobile (5) du premier dispositif d'entraînement (1).

3. Manipulateur selon revendication 2,
caractérisé
par le fait que les raccords hydrauliques (46, 47) pour le deuxième dispositif d'entraînement (2), ainsi que le deuxième dispositif de commande (12), sont fixés sur la partie mobile (5) du premier dispositif d'entraînement.

4. Manipulateur selon l'une des revendications précédentes,
caractérisé
par le fait que le deuxième dispositif d'entraînement (2) est une unité à cylindre (8) et piston (9), la partie mobile du deuxième dispositif d'entraînement étant le cylindre ou le piston.

5. Manipulateur selon l'une des revendications précédentes,
caractérisé
par le fait que, dans toutes les positions de fonctionnement (40, 42; 43) du premier dispositif de commande (11), la petite chambre de cylindre (6) est reliée à la pompe (13) et à une vanne limitatrice de pression (15).

6. Manipulateur selon revendication 5,
caractérisé
par le fait que la vanne limitatrice de pression (15) est constituée par un étage de commande principal (16) et par une vanne de surpression (17) reliée à la chambre de commande de l'étage de commande principal.

7. Manipulateur selon revendication 6,
caractérisé
par le fait que le piston de commande de l'étage de commande principal (16) est chargé, côté commande, par un ressort (31) ainsi que, dans toutes les positions de fonctionnement (40, 42, 43) du premier dispositif de commande, par la pression de la petite chambre de cylindre (6) et, dans la position de non-fonctionement (41), par la pression du réservoir.

8. Manipulateur selon revendication 7,
caractérisé
par le fait que, dans la position de non-fonctionnement (41) du premier dispositif de commande (11), la petite chambre de cylinde (6) est reliée à la pompe (13) et la grande chambre de cylindre (7) au réservoir (14).

9. Manipulateur selon revendication 8,
caractérisé
par le fait que, dans toutes les positions de fonctionnement (40, 42, 43), le premier dispositif de commande (11) relie la petite chambre de cylindre (6) à la pompe (13) et, dans la position de non-fonctionnement (41), relie la grande chambre de cylindre (7) au réservoir (14), et par le fait que, dans les positions de fonctionnement (40, 42, 43), le premier dispositif de commande (11) relie la grande chambre de cylindre au réservoir, la ferme et, dans la troisième position de fonctionnement (43), la relie à la pompe (14).

10. Manipulateur selon l'une des revendications précédentes,
caractérisé
par le fait que le deuxième dispositif de commande (12) est une vanne proportionelle (32),
et par le fait que la vanne de régulation de pression (35) se trouve dans la conduite (46) de liaison entre la petite chambre de cylindre (6) du premier dispositif d'entraînement (1) et la vanne proportionnelle et maintient à une valeur constante, la différence entre la pression d'entrée de la vanne proportionnelle et la pression de charge du deuxième dispositif d'entraînement hydraulique (2),
la vanne de régulation de pression étant de préférence une balance de pression à deux voies (35) ayant une chambre de ressort qui, dans les positions de fonctionnement du deuxième dispositif de commande, est exposée à la pression de charge du deuxième dispositif d'entraînement.

11. Manipulateur selon l'une des revendications précédentes,
caractérisé
par le fait que le deuxième dispositif de commande (12) peut être attaqué électriquement.

12. Manipulateur selon l'une des revendications précédentes,
caractérisé
par le fait que la transition entre les positions de fonctionnement est continue.

13. Manipulateur selon l'une des revendications précédentes,
caractérisé
par le fait que la position de la partie mobile (5) du premier dispositif d'entraînement (1) est mesurée par un capteur de position (22) et la valeur effective de la position est comparée à la valeur de consigne de la position de la partie mobile,
et par le fait que la pression dans la grande chambre de cylindre (7) est commandée en fonction de la différence entre valeur effective et valeur de consigne.

14. Manipulateur selon l'une des revendications 1 à 13,
caractérisé
par le fait que, dans le cas d'un dispositif de réception de conteneurs de déchets, pour véhicules collecteurs de déchets, comportant, guidée à coulissement sur un rail-support (63) et déplaçable par une première unité piston-cylindre à fluide sous pression(67), une pièce porteuse (64) sur laquelle est monté un bras pivotant (65) qui porte au moins un organe preneur (77, 78) et peut être déplacé par pivotement par une deuxième unité piston-cylindre à fluide sous pression (68), lesdites première et deuxième unité piston-cylindre à fluide sous pression (67, 68) forment les deux dispositifs d'entraînements hydrauliques (1, 2) du manipulateur,
par le fait que la tige de piston (71) de la première unité piston-cylindre à fluide sous pression (67) est fixée sur une partie terminale du rail-support (63) et la pièce porteuse (64) est fixée au cylindre (69) de cette unité,
par le fait que les conduites (80, 81) fournissant de l'huile de pression aux chambres (82, 83) du cylindre de la première unité piston-cylindre à fluide sous pression passent dans la tige de piston (71) de la première unité piston-cylindre (67),
et par le fait que les conduites (86, 87) de fourniture d'huile de pression à la deuxième unité piston-cylindre à fluide sous pression (68) sont raccordées à des régions extrêmes du cylindre (69) de la première unité piston-cylindre à fluide sous pression (67) sur lesquelles le piston (70) ne passe pas.

15. Manipulateur selon revendication 14,
caractérisé
par le fait que le cylindre de la première unité piston-cylindre à fluide sous pression est fixé sur une partie terminale du rail-support (63) et les conduites pour la fourniture d'huile à la deuxième unité piston-cylindre à fluide sous pression passent dans la tige de piston de la première unité piston-cylindre à fluide sous pression.
